# EUROPÄISCHE PATENTSCHRIFT

(11) **EP 1 659 017 B1**
(45) Veröffentlichungstag und Bekanntmachung des Hinweises auf die Patenterteilung: **09.01.2008**
(21) Anmeldenummer: 05023105.9
(22) Anmeldetag: 22.10.2005
(51) Int. Cl.: B60K 23/02, G05G 1/14, B60T 7/06

(54) **Einrichtung zur Pedalkraftreduktion**
Apparatus for reduction of the pedal force
Dispositif pour réduire la force d'une pédale

(30) Priorität: 20.11.2004 DE 102004056080
(43) Veröffentlichungstag der Anmeldung: 24.05.2006
(73) Patentinhaber: LuK Lamellen und Kupplungsbau Beteiligungs KG, 77815 Bühl (DE)
(72) Erfinder: Hans, Dominik, 76461 Muggensturm (DE)

(56) Entgegenhaltungen:
- DE-A1- 2 327 041
- DE-A1- 2 838 833
- DE-A1- 4 321 517
- DE-A1- 10 126 194
- DE-A1- 10 163 250
- DE-B1- 2 221 219
- US-A- 1 659 285
- US-A- 2 315 632
- US-A- 4 386 537
- US-A1- 2002 088 303

## Beschreibung

Die Erfindung betrifft eine Betätigungseinrichtung für eine hydraulische Kupplungsanlage, insbesondere für Reibungskupplungen von Kraftfahrzeugen mit Unterstützung der Betätigungskraft, wobei das Pedal mittels einer Kolbenstange direkt mit einem Kolben eines Geberzylinders verbunden ist. Dadurch ergibt sich je nach Schwenkwinkel des Pedals eine nahezu konstante Übersetzung.

Aus der JP 60-56 636 ist eine Pedalübersetzung bekannt, bei der ein Seilzug auf einer Auflage mit veränderlichem Durchmesser zu liegen kommt. Nachteilig ist hierbei einerseits der große Schwenkwinkel, den der Seilzug vollführen muss, sowie die eingeschränkte Möglichkeit, die Übersetzung zu variieren, da der Seilzug grundsätzlich tangential auf der Auflage zu liegen kommt.

Weiterhin ist in der DE-OS 2516 659 eine Pedalübersetzung beschrieben, bei der ein Steuerhebel um einen ersten Drehpunkt schwenkbar ist, wenn auf ein freies Ende des Steuerhebels eine Kraft ausgeübt wird, und ein zweiter Drehpunkt bezüglich des ersten Drehpunktes bewegbar ist. Zur Führung der Bewegung des zweiten Drehpunktes relativ zum Steuerhebel entlang einer gekrümmten Bahn, sind elastische Vorspannmittel vorgesehen, die den zweiten Drehpunkt auf der gekrümmten Bahn vom ersten Drehpunkt wegdrücken oder wegziehen. Die Übersetzung ist dabei abhängig von der Kraft, die beispielsweise von einer Kupplung in eine Kolbenstange eingeleitet wird. Diese Abhängigkeit von der Kraft ist aber bei der Betätigung von Kupplungen nicht erwünscht, da die Ausrückkraft durch verschiedene Umstände, wie Temperatur, Betätigungsgeschwindigkeit usw., stark schwanken kann. Das hätte zur Folge, dass sich dadurch auch die Kuppelpunkte ändern würden, was äußerst störend ist.

In der DE 199 34 238 C1 wird außerdem eine Lösung zur federkraftunterstützten Betätigung einer Fahrzeugkupplung aufgezeigt, die aus einem verschwenkbar an einer Lagerstelle gelagerten Pedal, das mit einem Geberzylinder wirkverbunden ist und mit einer am Pedalbock und Pedal befestigten, vorgespannten Übertotpunktfeder besteht. Wesentlich ist dabei, dass der Geberzylinder mittels seiner Kolbenstange mit dem Pedal wirkverbunden ist, um bereits dadurch eine Aufteilung des Pedals in zwei unterschiedlich lange Hebelarme zu erhalten, wodurch eine Kraftübersetzung möglich ist. Die Größe für die Kraftübersetzung ist damit konstant vorgegeben.

Die DE 3 237 041 A offenbart eine Einrichtung nach dem Oberbegriff des Anspruchs 1.

Aufgabe der Erfindung ist es, eine auf das Pedal seitens eines Ausrücksystems einwirkende Kraft derart zu übersetzen, dass unter Beibehaltung eines vorgegebenen Ausrückweges einer Kupplung und gleichzeitig vorgegebenem maximalem Pedalweg, das Betätigungskraftmaximum abgesenkt wird.

Die Aufgabe der Erfindung wird durch die im Patentanspruch 1 angegebenen Merkmale gelöst. Bei einer Einrichtung zur Pedalkraftreduktion mit einem an einem Pedalbock um einen Drehpunkt gelagerten Pedal, steht die Kolbenstange mit dem Pedal über dessen Länge in mittelbarer Wirkverbindung. Durch diese über eine mittelbare Wirkverbindung ist es möglich, eine variable Übersetzung zu realisieren. Diese mittelbare Wirkverbindung ist konstruktiv so ausgeführt, dass das Ende der Kolbenstange mit einer mindestens eine Führungsbahn aufweisenden Kulissenscheibe versehen ist und am Pedal mindestens eine Führungsrolle vorgesehen ist, die mit dieser Führungsbahn die Wirkverbindung realisiert.

Mit dieser konstruktiven Lösung für eine variable Pedalkraftübersetzung ist es in vorteilhafter Weise möglich, auf einfache Art und Weise eine Betätigungskraftanpassung an den jeweiligen Fahrzeugtyp bzw. die darin eingesetzte Kupplung vornehmen zu können. Gegenüber einer konventionellen konstanten Pedalübersetzung steigt die Kraftkennlinie am Anfang der Pedalbetätigung steiler an, flacht sich dann jedoch im Bereich der höchsten Kupplungskräfte aufgrund der sich verändernden Übersetzung stärker ab und bleibt unterhalb der ansonsten maximalen Pedalkräfte eines konventionellen Systems. Die Anpassung an die entsprechende Kupplung erfolgt über die jeweilige Form der Führungsbahnen, wobei die Lage und Anzahl der Führungsrollen unterschiedliche Ausgestaltungen der Führungsbahnen erforderlich machen. So können mehrere Führungsbahnen jeweils eine geschlossene Form haben oder aber auch unterschiedlich ausgeführt sein, indem eine Führungsbahn beispielsweise in sich geschlossen ist und eine andere Führungsbahn eine offene Form aufweist.

In vorteilhafter Weiterbildung der Erfindung weist das Ende der Kolbenstange einen Anlenkpunkt auf, über den eine am Pedalbock befestigte Verbindungsstrebe drehbar mit diesem verbunden ist. Eine kleine Anzahl an miteinander in Wirkverbindung stehenden Bauteile wirkt sich letztendlich positiv auf die Toleranzkette aus.

Die erfindungsgemäße Lösung soll anhand eines Ausführungsbeispiels näher erläutert werden. Es zeigen:
- Figur 1: eine Pedaleinrichtung mit erfindungsgemäßer Lösung,
- Figur 1a: Pedaleinrichtung nach Figur 1 in Explosionsdarstellung,
- Figuren 2a bis 2c: Pedaleinrichtung nach Figur 1 in unterschiedlichen Pedalstellungen,
- Figuren 3a bis 3c: Pedaleinrichtung in einer weiteren Variante der erfindungsgemäßen Lösung in unterschiedlichen Pedalstellungen,
- Figur 4a und 4b: Pedaleinrichtung einer nicht von den Patentansprüchen erfassten Variante in den beiden Pedalendstellungen,
- Figur 5a und 5b: weitere Variante der erfindungsgemäßen Lösung für eine Pedaleinrichtung in den beiden Pedalendstellungen.

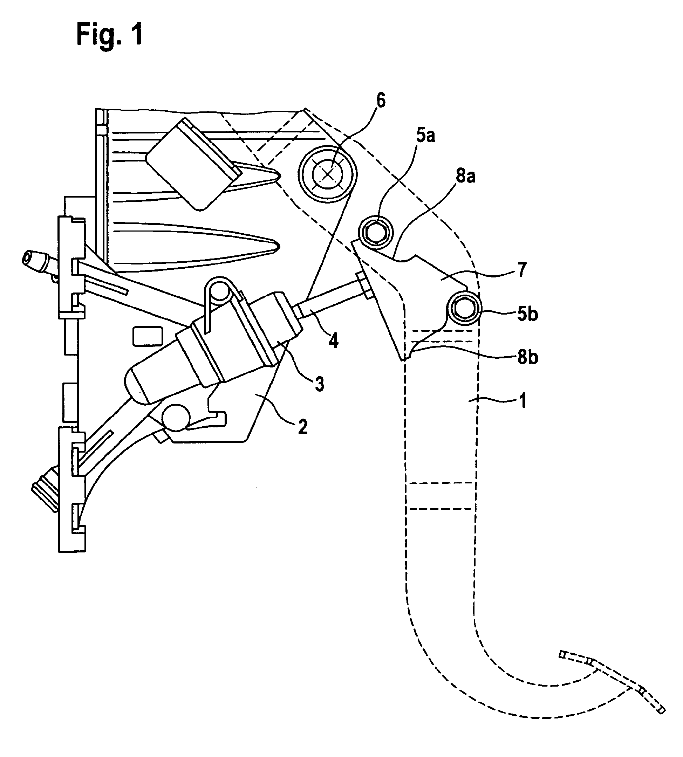

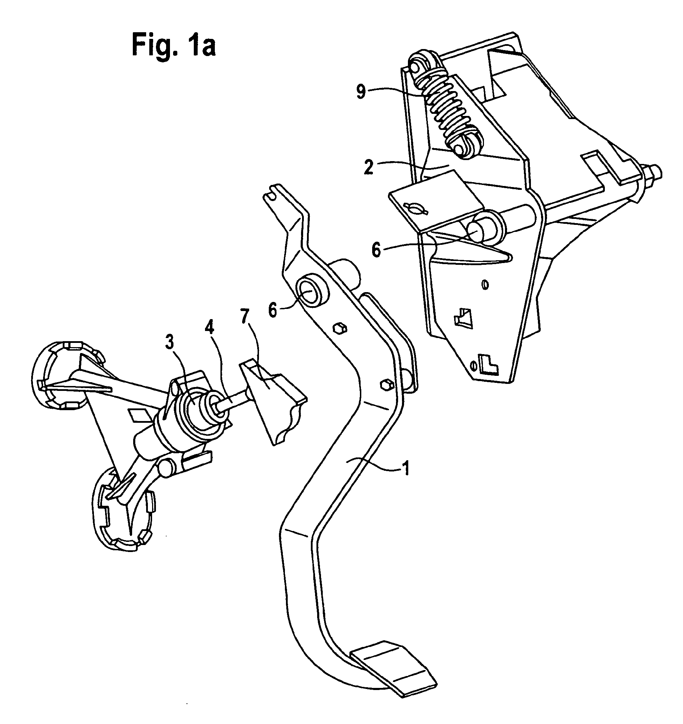

Zur Erleichterung der Betätigung eines Kupplungspedals 1 ist es sinnvoll, den Anlenkpunkt der Kolbenstange 4 des Geberzylinders 3 am Pedal 1 so zu wählen, dass der Fahrer möglichst wenig Kraft zur Betätigung des Kupplungspedals 1 benötigt. Aus diesem Grunde ist die Stelle für den Anlenkpunkt der Kolbenstange 4 des Geberzylinders 3 am Pedal 1 so zu wählen, dass mit Hilfe der restlichen Länge des Hebelarms des Pedals 1 bereits eine Übersetzung der Betätigungskraft erreicht wird. Dieses Übersetzungsprinzip ist zunächst aus der Figur 1 ersichtlich, wobei dieser Übersetzung eine weitere Übersetzung mit Hilfe der erfinderischen Lösung überlagert wird, wodurch auf Grund der Gestaltung der miteinander in Eingriff stehenden Bauteile eine variable Übersetzung möglich ist. Diese zusätzliche Übersetzung wird dadurch erreicht, dass entweder am Ende der Kolbenstange 4, wie in Figur 1, eine Kulissenscheibe 7 angebracht ist, an der an der entsprechenden Stelle je eine Führungsbahn 8a und 8b eingearbeitet ist, die mit der jeweiligen auf dem Pedal 1 angeordneten Laufrolle 5a und 5b gleichzeitig in Wirkverbindung steht, oder eine mit der Kolbenstange 4 in Wirkverbindung stehende Profilkulisse am Pedalbock 2 bewegbar angeordnet sind.

Die Figur 1a zeigt die erfindungsgemäße Lösung in Form einer Explosionsdarstellung.

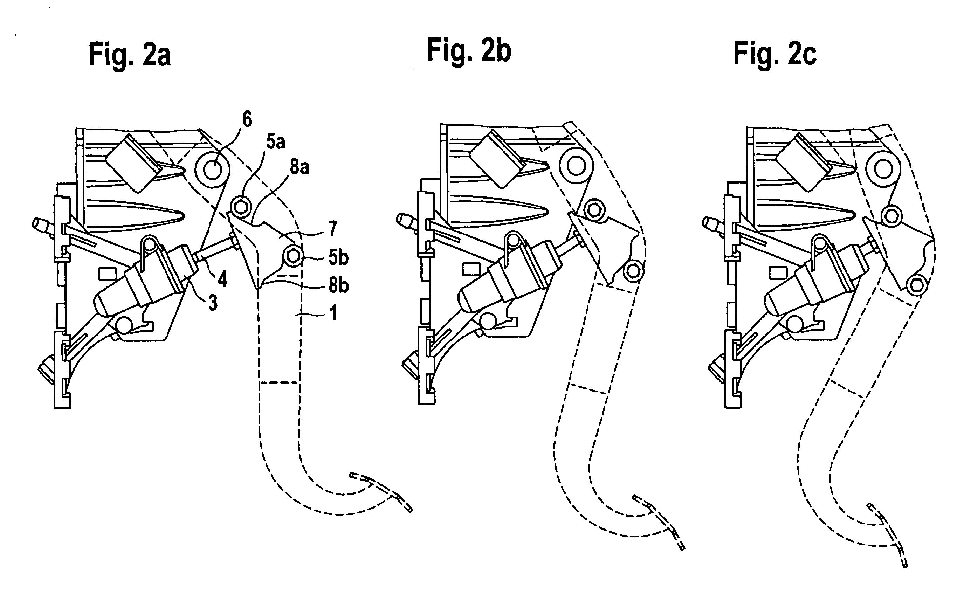

In den Figuren 2a bis 2c ist die Funktionsweise der variablen Übersetzung dargestellt. Figur 2a zeigt die Stellung des Kupplungspedals 1 bei geschlossener Kupplung, das heißt, das Kupplungspedal 1 wird nicht betätigt, die Kolbenstange 4 und damit das Kupplungspedal 1 nehmen ihre Ausgangslage ein. Damit befinden sich die mit der Kulissenscheibe 7 in Wirkverbindung stehenden Führungsrollen 5a und 5b ebenfalls in der Ausgangsstellung auf ihren Führungsbahnen 8a und 8b. Wird die Kupplung geöffnet, das heißt, das Kupplungspedal 1 wird vom Fahrer betätigt, führt dieses über seinen Drehpunkt 6 eine Schwenkbewegung aus, wobei gleichzeitig über die Führungsrollen 5a und 5b und die Führungsbahnen 8a und 8b der Kulissenscheibe 7 die Kolbenstange 4 in den Geberzylinder 3 so lange hineingedrückt wird (Figur 2b), bis die Endstellung des Kupplungspedals 1 erreicht ist (Figur 2c), in der die Kupplung ganz geöffnet ist. In dieser Stellung nehmen die beiden Führungsrollen 5a und 5b ebenfalls ihre Endstellung auf den Führungsbahnen 8a und 8b ein. Ebenso haben die Kolbenstange 4 und der Kolben des Geberzylinders 1 jeweils ihre Endlage erreicht.

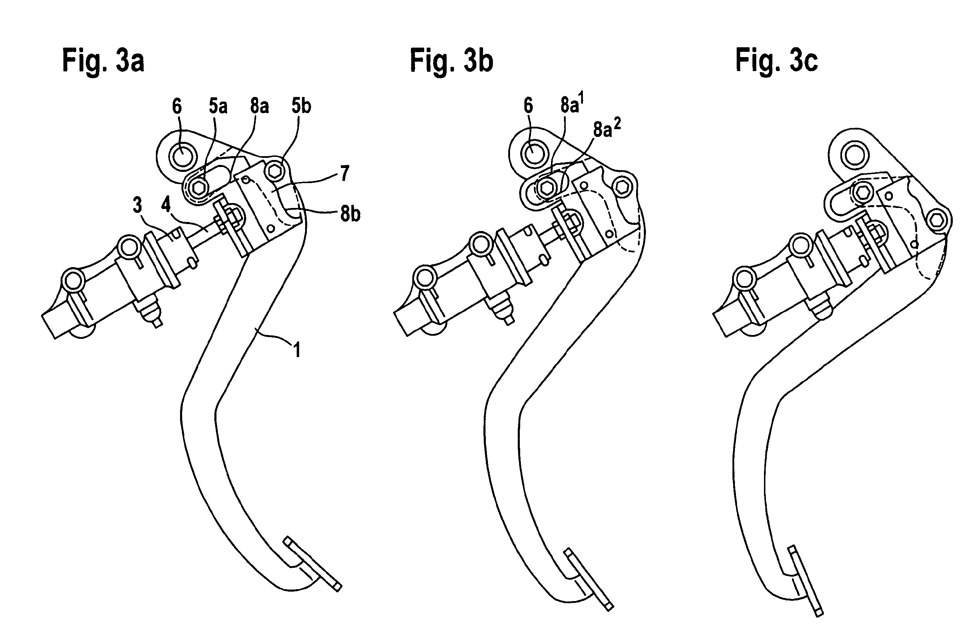

Die Figuren 3a bis 3c zeigen eine weitere Variante der Ausgestaltung für die erfindungsgemäße Kulissenscheibe 7. Der wesentliche Unterschied zu den bereits beschriebenen Figuren besteht darin, dass die Führungsrolle 5a in einer Führungsbahn 8a geführt wird, die eine in sich geschlossene Bahn (Langloch) darstellt. Diese geschlossene Führungsbahn 8a dient dazu, auftretende Radialkräfte der Führungsrolle 5a bei Betätigung des Pedals 1 aufzunehmen und gleichzeitig eine Zwangsführung zu realisieren. In der Pedalstellung gemäß Figur 3a befinden sich die Führungsrollen 5a und 5b in ihrer Ausgangsstellung, das heißt, die Pedaleinrichtung befindet sich in ihrer Ausgangslage. Die Figur 3b stellt den Zeitpunkt dar, in welchem die Kupplung "schleift" und die größte Kraft am Pedal 1 anliegt. Auf Grund der gekrümmten Führungsbahn 8 b, auf der die Kraftlinie der Führungsrolle 5a immer senkrecht steht, wirkt in dieser Pedalstellung auch eine Kraft auch in Richtung Gelenk 6, wodurch sich die Rolle 5a an die innere Wand der Führungsbahn 8a² anlegt. Bei weiterer Betätigung des Pedals 1 wird die Rolle 5a weiter entlang ihrer Führungsbahn bewegt, bis sie letztendlich ihre Endstellung erreicht hat. Diese Endstellung der Führungsrolle 5a dient gleichzeitig als Anschlag für das Pedal 1.

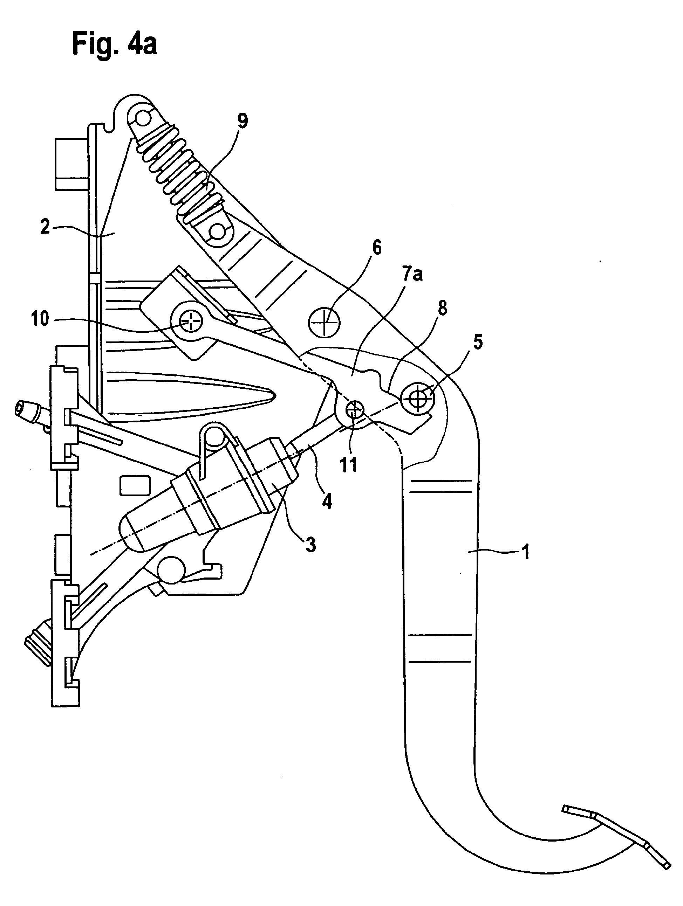

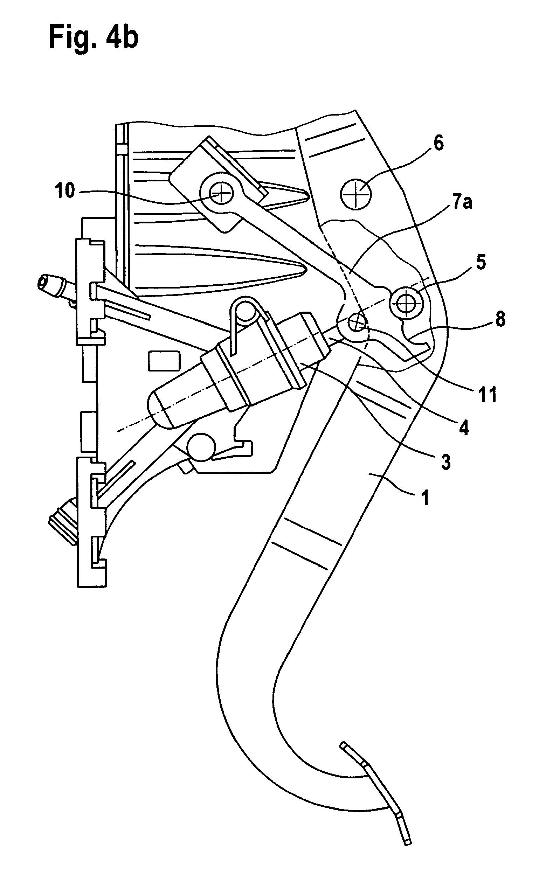

Die Figuren 4a und 4b zeigen eine weitere Variante für die Ausgestaltung der Kulissenscheibe 7, wodurch gleichzeitig die für eine variable Übersetzung benötigte Anzahl an Laufrollen auf nur eine Laufrolle 5 reduziert wird. Wie aus der Figur 4a ersichtlich, weist die Kolbenstange 4 an ihrem Ende einen Anlenkpunkt 11 auf, an dem eine Kulisse in Form einer Kulissenstange 7a gelenkig gelagert ist. Diese Kulissenstange 7a ist mit ihrem Drehpunkt 10 am Pedalbock 2 drehbar gelagert. Bei Betätigung des Pedals 1 wird dieses um seinen Drehpunkt 6 bewegt und drückt dabei die Laufrolle 5 gegen die Führungsbahn 8 der Kulissenstange 7a. Dabei wird gleichzeitig die Kulissenstange 7a um den Drehpunkt 10 bewegt und die Kolbenstange 4 über den Anlenkpunkt 11 in den Geberzylinder 3 hineingedrückt. Dabei führt die Kolbenstange 4 zusätzlich zu ihrer axialen Bewegung noch eine Schwenkbewegung aus, was aus der Figur 4b deutlich hervorgeht. Die Kulissenstange 7a erfüllt zwei Funktionen; nämlich sie dient einerseits zur Führung der Kolbenstange 4 des Kolbens des Geberzylinders 3 und mit der entsprechend ausgelegten Führungsbahn 8 in ihrem Endbereich dient sie zur Realisierung der variablen Übersetzung, wobei die Pedalkraft durch die Übertotpunktfeder 9 (aus Figur 4a ersichtlich) zusätzlich abgesenkt werden kann.

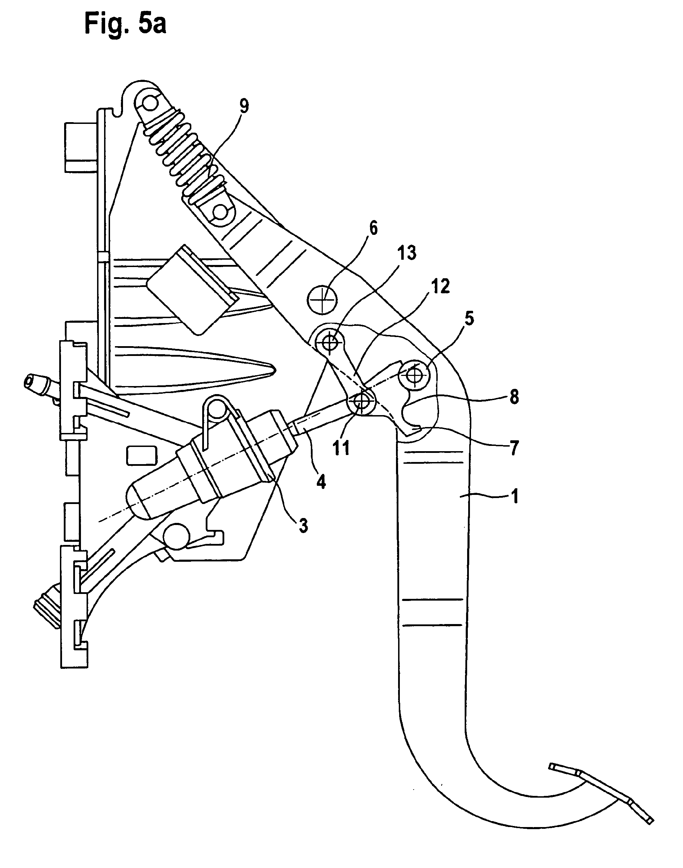

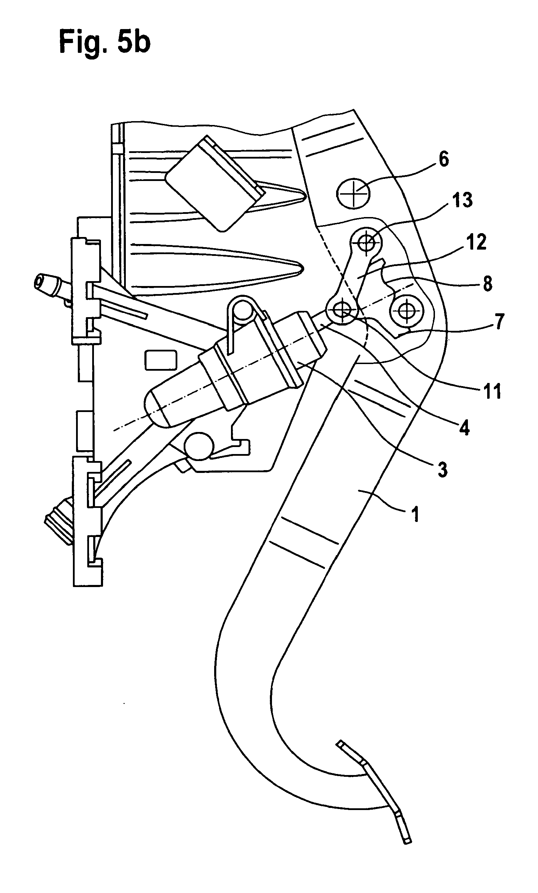

Die Figuren 5a und 5b zeigen eine weitere mögliche Ausgestaltung einer variablen Übersetzung. Auch hier kann aufgrund der besonderen Gestaltung der Führung der Kolbenstange 4 die Anzahl der Führungsrollen auf nur eine Führungsrolle 5 begrenzt werden. Diese Lösung zeichnet sich dadurch aus, dass eine Verbindungsstrebe 12 eine Verbindung zwischen Pedalbock 2 und Kolbenstange 4 herstellt, da sie einerseits am Pedalbock 2 über ihren Anlenkpunkt 13 und andererseits an der Kolbenstange 4 über ihren Anlenkpunkt 11 angebunden ist, Auch hier ist, wie in Figur 1 dargestellt, das Ende der Kolbenstange 4 mit einer eine Führungsbahn 8 aufweisenden Kulissenscheibe 7 verbunden. Diese Führungsbahn 8 steht wiederum mit der Führungsrolle 5 in Wirkverbindung. Figur 5a zeigt die Pedaleinrichtung im nicht betätigten Zustand und die Figur 5b die Pedaleinrichtung in der Pedalendstellung.

### Bezugszeichenliste

- 1: Pedal, Kupplungspedal
- 2: Pedalbock
- 3: Geberzylinder
- 4: Kolbenstange
- 5, 5a, 5b: Führungsrolle
- 6: Pedaldrehpunkt
- 7: Kulissenscheibe
- 7a: Kulissenstange
- 8, 8a, 8b: Führungsbahn
- 8a¹: äußerer Teil der Führungsbahn
- 8a²: innerer Teil der Führungsbahn
- 9: Übertotpunktfeder
- 10: Drehpunkt Kulissenstange
- 11: Anlenkpunkt Kolbenstange an Kulissenstange
- 12: Verbindungsstrebe
- 13: Anlenkpunkt Verbindungsstrebe an Pedal

## Patentansprüche

1. Einrichtung zur Pedalkraftreduktion mit einem an einem Pedalbock (2) um einen Drehpunkt (6) gelagerten Pedal (1), das innerhalb seiner Länge mit dem Ende einer Kolbenstange (4) eines Geberzylinders (3) in unmittelbarer Wirkverbindung steht, wobei das Ende der Kolbenstange (4) mit einer mindestens eine Führungsbahn (8, 8a, 8b) aufweisenden Kulissenscheibe (7) versehen ist **dadurch gekennzeichnet, dass** die Kulissenscheibe ausschließlich mit dem Pedal in Wechselwirkung tritt.

2. Einrichtung nach Anspruch 1, **dadurch gekennzeichnet, dass** am Pedal (1) mindestens eine Führungsrolle (5, 5a, 5b) vorgesehen ist, die mit einer Führungsbahn (8, 8a, 8b) in Wirkverbindung steht.

3. Einrichtung nach Anspruch 1 und 2, **dadurch gekennzeichnet, dass** die Anzahl und Form der Führungsbahnen (8, 8a, 8b) entsprechend der gewünschten Übersetzung wählbar und ausgebildet ist.

4. Einrichtung nach Anspruch 1 und 2, **dadurch gekennzeichnet, dass** mindestens eine Führungsbahn (8, 8a, 8b) eine in sich geschlossene Form aufweist.

5. Einrichtung nach Anspruch 1 und 2, **dadurch gekennzeichnet, dass** das Ende der Kolbenstange (4) einen Anlenkpunkt (13) aufweist, über den eine am Pedalbock (2) befestigte Verbindungsstrebe (12) drehbar mit diesem verbunden ist.

6. Einrichtung nach den Ansprüchen 1 bis 5, **dadurch gekennzeichnet, dass** sie für eine mittels eines Geberzylinders (3) betätigbaren Kupplung einsetzbar ist.

7. Einrichtung nach Anspruch 1, **dadurch gekennzeichnet, dass** sie für hydraulische Bremsanlagen einsetzbar ist.

## Claims

1. Device for reducing pedal force, having a pedal (1) supported around a fulcrum (6) on a pedal support (2), which pedal is in direct operative connection within its length with the end of a piston rod (4) of a master cylinder (3), the end of the piston rod (4) being provided with a connecting plate (7) having at least one guideway (8, 8a, 8b), **characterized in that** the connecting plate enters into interaction exclusively with the pedal.

2. Device according to Claim 1, **characterized in that** at least one guide roller (5, 5a, 5b) which is in operational connection with a guideway (8, 8a, 8b) is provided on the pedal (1).

3. Device according to Claims 1 and 2, **characterized in that** the number and shape of the guideways (8, 8a, 8b) is selectable and designed according to the desired transmission ratio.

4. Device according to Claims 1 and 2, **characterized in that** at least one guideway (8, 8a, 8b) has a self-contained form.

5. Device according to Claims 1 and 2, **characterized in that** the end of the piston rod (4) has a hinge point (13) through which a connecting strut (12) attached to the pedal support (2) is rotatably connectable to the piston rod.

6. Device according to Claims 1 through 5, **characterized in that** it is usable for a clutch operable by means of a master cylinder (3).

7. Device according to Claim 1, **characterized in that** it is usable for hydraulic brake systems.

## Revendications

1. Dispositif pour la réduction de la pression sur la pédale avec une pédale (1) articulée sur un support de pédale (2) autour d'un centre de rotation (6) et laquelle formant à l'intérieur de sa longueur une liaison active directe avec l'extrémité d'une tige de piston (4) d'un cylindre d'émission (3), l'extrémité de la tige de piston (4) étant pourvue d'une plaque coulissante (7) présentant au moins une piste de guidage (8, 8a, 8b), **caractérisé en ce que** la plaque coulissante interagit exclusivement avec la pédale.

2. Dispositif selon la revendication 1, **caractérisé en ce que** sur la pédale (1) est prévu au moins un galet de guidage (5, 5a, 5b) formant une liaison active avec une piste de guidage (8, 8a, 8b).

3. Dispositif selon les revendications 1 et 2, **caractérisé en ce que** le nombre et la forme des pistes de guidage (8, 8a, 8b) peuvent être sélectionnés et réalisés selon le rapport de transmission souhaité.

4. Dispositif selon les revendications 1 et 2, **caractérisé en ce qu'**au moins une piste de guidage (8, 8a, 8b) présente une forme fermée sur elle-même.

5. Dispositif selon les revendications 1 et 2, **caractérisé en ce que** l'extrémité de la tige de piston (4) présente un point d'articulation (13) au moyen duquel une entretoise de liaison (12) fixée au support de pédale (2) est reliée à ce dernier de façon rotative.

6. Dispositif selon les revendications 1 à 5, **caractérisé en ce qu'**il est utilisable pour un embrayage actionnable à l'aide d'un cylindre d'émission (3).

7. Dispositif selon la revendication 1, **caractérisé en ce qu'**il est utilisable pour des dispositifs de freinage hydrauliques.
